# EUROPEAN PATENT SPECIFICATION

(11) **EP 3 838 740 B1**
(45) Date of publication and mention of the grant of the patent: **17.04.2024**
(21) Application number: 20154794.0
(22) Date of filing: 31.01.2020
(51) Int. Cl.: B64C 1/18, B32B 5/00, B64D 11/00, D06N 7/00

(54) **AIRCRAFT FLOORING SYSTEM**
FLUGZEUGFUSSBODENSYSTEM
SYSTÈME DE PLANCHER D'AÉRONEF

(30) Priority: 18.12.2019 US 201962949818 P
(43) Date of publication of application: 23.06.2021
(73) Proprietor: Aladdin Manufacturing Corporation, Calhoun, GA 30701 (US)
(72) Inventor: SHAMIS, Martin, Cartersville, GA 30121 (US); STEVENSON, Nathan, Calhoun, GA 30701 (US)
(74) Representative: Unilin Technologies

(56) References cited:
- AU-A1- 2010 212 314
- US-A- 5 800 898
- US-A1- 2004 022 994

## Description

### BACKGROUND

Carpeting on airplanes presents a number of challenges not always found in a terrestrially-based carpet installation. For example, weight is of paramount importance during the selection of components for installation in aircraft, whereas it may not be a factor in selecting carpeting for an office building.

Containment of spills is also a factor on airplanes; there are often bolts, electronics, or wiring in panels under the carpet, and liquid reaching these components could have severe consequences. Spills are frequent occurrences on airplanes, as passengers often have beverages on trays, and limited space in which to maneuver themselves. Short turnaround times at airports, during which airplanes must be cleaned between flights, mean that making spills easier to clean up would benefit cleaning crews.

Further, carpet tiles are often undesirable for use as airplane carpeting, due to the increased presence of seams, compared to broadloom carpeting. Seams between tiles provide another avenue for liquids to find their way under the carpet.

AU2010/212314 discloses a carpet tile comprising a first layer comprising a non-woven primary backing having pile elements tufted through the backing to form loops on an underside of the backing. The carpet tile further comprises a second layer comprising a secondary backing and having loops provided substantially across the underside of the secondary backing for attachment to hooks of a hook and loop attachment system. The carpet tile also comprise a hot melt binder which fastens the first and second layers to each other. The backings may comprise polyester fibres.

US2004/022994 discloses a cushioned carpet fabric comprising a primary carpet having a primary base and a plurality of pile-forming yarns projecting outwardly from one side. A layer of reinforcement material is bonded to the primary base on the side opposite the pile forming yarns. The reinforcement layer is adjacent to and embedded in, a cushion layer of a polymer such as a polyurethane. Examples of reinforcement layers that can be used are woven or non-woven textile materials such as polyester or nylon.

A need exists for carpet tiles having a light weight and exhibiting resistance to spills, for use as airplane carpeting.

### BRIEF SUMMARY

The invention is described in independent claim 1. The dependent claims describe preferred embodiments of the invention.

According to the first aspect of the invention, an aircraft floor covering system is provided, said system comprising:
a) a carpet tile, said carpet tile comprising a barrier backing,
   said barrier backing comprising a top surface and a bottom surface, said
   top surface adhered to a polymer membrane, said bottom surface comprising a loop part of a hook-and-loop system; and
b) a hook part of a hook-and-loop system configured to be adhered to an aircraft floor,
wherein in use of the carpet tile the barrier backing is coupled to the hook part of the hook-and-loop system, characterized in that said polymer membrane is a polyester film membrane.

### BRIEF DESCRIPTION OF THE SEVERAL VIEWS OF THE DRAWINGS

Reference will now be made to the accompanying drawings, which are not necessarily drawn to scale, and wherein:
Figure 1 is a side cutaway view showing various components of a carpet tile according to one embodiment;
Figure 2 is a schematic diagram of a carpet tile and a flooring system, comprising loops and hooks of a hook-and-loop system, respectively, in close proximity to one another, according to one embodiment; and
Figure 3 is a schematic diagram showing the carpet tile and flooring of Figure 2 coupled to one another by a hook-and-loop system.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

In the following description, various components may be identified as having specific values or parameters, however, these items are provided as exemplary embodiments. Indeed, the exemplary embodiments do not limit the various aspects and concepts of the embodiments as many comparable parameters, sizes, ranges, and/or values may be implemented. The terms "first," "second," and the like, "primary," "exemplary," "secondary," and the like, do not denote any order, quantity, or importance, but rather are used to distinguish one element from another. Further, the terms "a," "an," and "the" do not denote a limitation of quantity, but rather denote the presence of "at least one" of the referenced item.

It is understood that where a parameter range is provided, all integers and ranges within that range, and tenths and hundredths thereof, are also provided by the embodiments. For example, "5-10%" includes 5%, 6%, 7%, 8%, 9%, and 10%; 5.0%, 5.1%, 5.2%....9.8%, 9.9%, and 10.0%; and 5.00%, 5.01%, 5.02%....9.98%, 9.99%, and 10.00%, as well as, for example, 6-9%, 5.1%-9.9%, and 5.01%-9.99%.

As used herein, "about" in the context of a numerical value or range means within ±10% of the numerical value or range recited or claimed.

Various embodiments are directed to a low-weight, dimensionally stable carpet, particularly carpet tiles, that is resistant to both doming and curling. The carpet is a multilayer carpet comprising a facecloth (comprising a primary backing and face yarn), coated with a low-viscosity polyolefin), bonded to a backing construction comprising a fibrous reinforcing scrim layer (e.g., woven or nonwoven) and an extruded polyolefin sheet, wherein the backing construction defines, at least in part, the bottom surface of the carpet. The low weight carpet product has a total weight of less than 2034.6 gram per square meter (60 ounces per square yard) while remaining resistant to deformation (dimensional deformation, curling, or doming) due at least in part to the presence of the reinforcing scrim layer in the backing construction.

According to the first aspect of the invention, an aircraft floor covering system is provided, said system comprising:
a) a carpet tile, said carpet tile comprising a barrier backing,
   said barrier backing comprising a top surface and a bottom surface, said
   top surface adhered to a polymer membrane, said bottom surface comprising a loop part of a hook-and-loop system; and
b) a hook part of a hook-and-loop system configured to be adhered to an aircraft floor,
wherein in use of the carpet tile the barrier backing is coupled to the hook part of the hook-and-loop system.

The polymer film membrane is a polyester membrane.

According to some embodiments, said carpet tile comprises a facecloth, wherein the facecloth comprises a primary backing having a plurality of face yarns extending through the primary backing.

According to some embodiments, adhesive is present between the primary backing and the polymer membrane.

According to some embodiments, said bottom surface of said barrier backing comprises loops in a density of ≥77.5 hooks per square centimeter (≥500 loops per square inch).

According to some embodiments, said hook part of said hook-and-loop system comprises hooks in a density of ≥77.5 hooks per square centimeter (≥500 hooks per square inch).

According to some embodiments, said hook-and-loop system, when coupled, exhibits a peel strength of ≥1, ≥2, ≥3, ≥4, ≥5, ≥6, ≥7, ≥8, ≥9, or ≥10 pounds per inch of width (PIW), as measured according to ASTM D5170.

According to some embodiments, said hook-and-loop system, when coupled, exhibits a shear strength of ≥5, ≥10, ≥15, ≥20, ≥25, ≥30, ≥35, ≥40, ≥45, ≥50, ≥55, ≥60, ≥65, ≥70, ≥75, ≥80, ≥85, or ≥90 pounds per square inch (psi) as measured according to ASTM D5169.

According to some embodiments, said hook-and-loop system, when coupled, exhibits a tension strength of ≥0.3445, ≥0.689, ≥1.0335, ≥1.378, ≥1.7225, ≥2.067, ≥2.4115, ≥2.756, or ≥3.1005 bar (≥5, ≥10, ≥15, ≥20, ≥25, ≥30, ≥35, ≥40, or ≥45 pounds per square inch (psi)).

According to some embodiments, said carpet tile further comprises a woven synthetic layer disposed between the polymer membrane and the primary backing.

According to some embodiments, adhesive is present between the woven synthetic layer and each of the primary backing and the polymer membrane. According to some further embodiments, the adhesive between the woven synthetic layer and the primary backing is the same as the adhesive between the woven synthetic layer and the polymer membrane. According to some alternative embodiments, the adhesive between the woven synthetic layer and the primary backing is different from the adhesive between the woven synthetic layer and the polymer membrane.

According to some embodiments, the hooks are attached directly to the aircraft floor.

According to some alternative embodiments, the hooks are part of a flooring component which is bound to the aircraft floor.

According to some embodiments, the weight of the carpet tile is between about 1017.3-2034.6 gram per square meter (30-60 ounces per square yard). According to some further embodiments, the weight of the carpet tile is between about 1356.4-1695.5 gram per square meter (40-50 ounces per square yard).

According to some embodiments, the weight of the carpet tile and flooring, combined, is between about 1356.4-3051.9 gram per square meter (40-90 ounces per square yard). According to some further embodiments, the weight of the carpet tile and flooring, combined, is between about 1695.5-2373.7 gram per square meter (50-70 ounces per square yard).

### Carpet tile

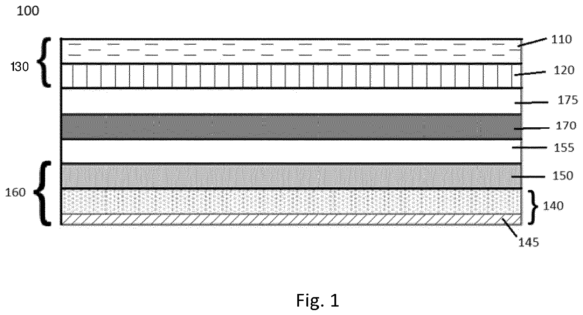

Referring to the figures, in which like numerals refer to like elements through the several figures, Fig. 1 illustrates schematically (not to scale) one potential construction of the carpet tile. It is generally designated by reference numeral **100**. The carpet tile **100** includes face yarn **110**, which is tufted into a mesh, woven, or spunbonded fabric known as a primary backing **120**. The primary backing **120** has pile yarns **110** tufted therethrough extending outwardly from one face (the "top"). In the construction shown in Fig. 1, the other side of the primary backing **120** (the "bottom") is secured to one face of a reinforced woven synthetic layer **170**, secured by an adhesive layer **175**. The other face of the reinforced woven synthetic layer **170** is secured to a polymer membrane **150**, by a second adhesive layer **155**. The polymer membrane **150**, in turn, is secured to a nonwoven fabric **140**. A plurality of loops **145**, which may form part of a hook-and-loop system, is part of the nonwoven fabric **140**. The polymer membrane **150** and the nonwoven fabric **140**, combined, may be referred to as a barrier backing **160** (or "lower backing"). Face yarn **110** and primary backing **120**, combined, may be referred to as a facecloth **130**. In embodiments without the reinforced woven synthetic layer **170**, and consequently without adhesive layer **175**, the bottom face of the primary backing **120** is secured to the polymer membrane **150** by adhesive layer **155**.

The primary backing **120** is a supportive scrim through which the tufts are tufted, and frequently is polyolefin, such as polyethylene or polypropylene; however, other materials such as polyester (including, for example, PET) can be used. For example, slit tapes made from PET may be used. The face yarn **110** may be made from various materials, both natural and synthetic, such as nylon 6, nylon 6, 6, cotton, wool, nylon, acrylic, polyester, polyamides, polypropylene, and other polyolefins. The face weight of the face yarn **110** can be approximately 169.55 gram per square meter (5 ounces per square yard) to approximately 1695.5 gram per square meter (50 ounces per square yard).

The primary backing **120** may be formed from a substrate such as a woven substrate, a tape yarn substrate, and/or other substrate construction that imparts stability to the carpet tile **100**. The substrate may be made from a polyester, such as poly(ethylene terephthalate) [PET], poly(trimethylene terephthalate) [PTT], poly(butylene terephthalate) [PBT], poly(ethylene terephthalate-co-isophthalate), poly(ethylene naphthalenedicaroxylate) [PEN], and copolymers thereof, and/or combinations thereof, with PET being preferred. In certain embodiments, the primary backing 120 may comprise a low melt polyester material configured to bind the various fibers together upon application of heat to the primary backing. The substrate may also comprise sheathed fibers, which may comprise a polyester core surrounded by a polyamide and/or polyolefin sheath. Typically, the polyester core may be made from PET, PTT, PBT, PEN, poly(ethylene terephthalate-co-isophthalate) and copolymers thereof. The polyamide sheath may be made from polycaprolactam [nylon 6], poly(7-heptanamide) [nylon 7], polycapryllactam [nylon 8], poly(9-nonanamide) [nylon 9], poly(tetramethylene adipamide) [nylon 4,6], poly(hexamethylene adipamide) [nylon 6,6], poly(methylene-4,4'-dicyclohexylene dodecanediamede), poly(1,4-cyclohexylenedimethulene suberamide), poly(m-phenylene isophthalamide), and poly(p-phenylene terephthalamide), with polycaprolactam [nylon 6] being the preferred polyamide. In certain embodiments, the primary backing **120** may be formed using a woven substrate using any conventional natural or synthetic woven material, such as cotton, jute, rayon, paper, nylon, polypropylene and other polyolefins, polyamides, polyesters, and the like.

The face yarn **110** may be tufted through the primary backing **120** so that the ends of the face yarn **110** extend in an outwardly direction from the topside of the primary backing **120** to form an upper surface of the carpet tile **100**. Typically the face yarn **110** is tufted into the primary backing **120** at a weight of approximately 88.17 gram per square meter (2.6 ounces per square yard) to approximately 200.07 gram per square meter (5.9 ounces per square yard), and more preferably approximately 101.73 gram per square meter (3 ounces per square yard). The tufting may be performed using conventional techniques that are well known in the art. Furthermore, the tufted face yarn **110** loops may be left as uncut to form an uncut pile carpet, cut to form a cut pile carpet, or partially cut to form a tip sheared carpet, as is well known in the art.

Optionally disposed on a bottom surface of the facecloth **130**, according to the embodiment of Fig. 1, is a reinforced woven synthetic layer **170**, secured by an adhesive layer **175**. The reinforced woven synthetic layer **170**, if present, imparts dimensional stability to the finished carpet tile **100**.

The reinforced woven synthetic layer **170** may comprise a fibrous material provided in a woven configuration. The fibrous materials themselves may constitute any number of natural or synthetic materials. For example, the fibrous materials may be embodied as glass fibers. The fibrous material may additionally and/or alternatively comprise one or more polymer based fibers, such as polyester fibers, polyamide fibers, polyurethane fibers, combinations thereof, and/or the like. For example, the polymer fibers may comprise polypropylene fibers, polyethylene fibers, sheathed polymer fibers (e.g., having a polyethylene core and a nylon or polypropylene sheath), and/or the like. As yet another example, the fibrous material may comprise a composite of polymer-based fibers and other fibers (e.g., glass fibers). Such a composite may comprise layers of non-woven and/or woven layers (e.g., a first layer comprising a polymer-based fiber material and a second layer comprising a glass fiber material).

The adhesive layer **175**, if present, may comprise any adhesive suitable for adhering layers of carpet together. The adhesive is preferably a thermoset adhesive.

The polymer membrane **150** is typically a polyester film membrane. It is preferably formed via extrusion of a polymer resin. The polymer membrane **150** is also preferably liquid-impermeable and non-breathable. The polymer membrane **150** is also non-porous, or microporous (*i.e.*, having pores with a diameter <2 nm).

The resin of the polymer membrane **150** may comprise a polyolefin or a mixture of one or more polyolefins, and may further comprise with one or more other polymers. For example, the resin may comprise polyethylene and/or polypropylene. As specific examples, the polyolefin polymer is embodied as 1-propene, ethylene copolymer or ethylene-propylene copolymer. In certain embodiments, the resin of the polymer membrane **150** comprises the polyolefin or polyolefin mixture in an amount between about 10-99 wt% of the resin of the polymer membrane **150** (and of the polymer membrane **150** itself).

The resin used to form the polymer membrane **150** may additionally comprise one or more additives, such as an inert filler material, a colorant, an antioxidant, a tackifier, a viscosity modifier, a flame retardant, and/or the like.

The inert filler material may be made from carbonates such as calcium carbonate (CaCO₃), cesium carbonate (CsCO₃), strontium carbonate (SrCO₃), and magnesium carbonate (MgCO₃); sulfates such as barium sulfate (BaSO₃); oxides such as iron oxide (Fe₂O₃ or Fe₃O₄), aluminum oxide (Al₂O₃), tungsten oxide (WO₃), titanium oxide (TiO₂), silicon oxide (SiO₂); silicates, such as clay; metal salts; fly ash and the like.

Additionally, the inert filler material may be made completely or in part from post-consumer or post-industrial (pre-consumer) recycled products, such as glass, carpets and/or other recycled materials. In cases where the inert filler is made from recycled glass, the recycled glass is ground into a fine glass powder before it is added as filler. The glass cullet may be made from automotive and architectural glass, also known as plate glass, flint glass, E glass, borosilicate glass, brown glass (bottle glass), green glass (bottle glass), and coal fly ash, or a combination thereof. In the case where recycled carpet is used as the inert filler material, the recycled carpet maybe ground into a fine cullet and added to the hot melt adhesive. In addition to the recycled carpet, remnants and trimmings of carpet (e.g., comprising trim waste from cutting carpet tiles from rolls of carpet, sometimes referred to as window waste), fine waste fibers that are a result of the shearing process, and the like, that are produced as a by-product during the manufacturing process may also be used to form the inert filler material.

The filled or unfilled polymer may also contain a colorant, such as carbon black or another colorant(s) to provide color and increase the opaqueness of the polymer membrane **150**. Typically, the colorant may be present in an amount less than or equal to approximately 1 wt% the filled or unfilled resin and polymer membrane **150**. For example, the colorant may be present in an amount between about 0.1-0.5 wt% of the polymer membrane **150**. As a specific example, the colorant may be present in an amount of approximately 0.1 wt% of the resin and the polymer membrane **150**.

Moreover, to reduce the possibility of thermo-oxidation degradation, the polymer in the resin may also contain one or more antioxidants. Some suitable antioxidants include, but are not limited to amines, 2,2'-methylene bis-(4-methyl-6-tert-butylphenol), 2,4,6-tri-tert-butylphenol, 2,6-di-tert-butyl-4-methylphenol, 4,4'-thio-bis-(6-tert-butyl-m-cresol), butylated hydroxy anisole, butylated hydroxy toluene, bis(hydrogenated tallow alkyl),oxide; tris(2,4-ditert-butylphenyl)phosphite and 1,3,5 triazine-2,4,6(1H, 3H, 5H)-trione,1,3,5,tris((3,5-(1-dimethylethyl))-4-hydroxyphenyl)methyl. Typically, the antioxidant may be present in the filled or unfilled polymer membrane **150** in an amount less than or equal to approximately 2 wt % of the resin and/or the polymer membrane **150**, such as between about 0.05-0.5 wt% of the resin and/or the polymer membrane **150**.

Moreover, the polymer membrane **150** may additionally include one or more tackifiers to aid in forming a strong mechanical bond with other layers.

The resin of the polymer membrane **150** may additionally include one or more viscosity modifiers and/or compatibilizers, such as, for example, olefins of higher or lower molecular weight than the resin discussed herein or ethylene maleic anhydride copolymer, to ensure proper flow and bonding of the resin within filler and polymers when applying onto a woven or nonwoven layer. The viscosity modifier may be present in an amount between about 0.1-3 wt% of the resin and the polymer membrane **150**.

In certain embodiments, the resin of the polymer membrane **150** may additionally comprise one or more flame retardants, such as, but not limited to, aluminum trihydrate (ATH) or magnesium hydroxide (MgOH) for applications where flame-retardancy is desired. One or more flame retardants may be necessary to comply with applicable regulations regarding the installation and/or usage of carpet tiles in aircraft.

The adhesive layer **155** may comprise any adhesive suitable for adhering layers of carpet together. The adhesive is preferably a thermoset adhesive.

The nonwoven fabric **140** may comprise a fibrous material provided in a woven configuration, and aids in preventing shrinkage or expansion of the resulting carpet tile 100.

The fibrous material itself may constitute any number of natural or synthetic materials. For example, the fibrous material may be embodied as glass fibers. The fibrous material may additionally and/or alternatively comprise one or more polymer based fibers, such as polyester fibers, polyamide fibers, polyurethane fibers, combinations thereof, and/or the like. For example, the polymer fibers may comprise polypropylene fibers, polyethylene fibers, sheathed polymer fibers (e.g., having a polyethylene core and a nylon or polypropylene sheath), and/or the like. As yet another example, the fibrous material may comprise a composite of polymer-based fibers and other fibers (e.g., glass fibers). Such a composite may comprise layers of non-woven and/or woven layers (e.g., a first layer comprising a polymer-based fiber material and a second layer comprising a glass fiber material).

As mentioned, the nonwoven fabric **140** will further comprise a plurality of loops **145** which may form the loop part of a hook-and-loop system. In embodiments, the loops **145** are present on the nonwoven fabric **140** at a density of ≥50, ≥100, ≥200, ≥300, ≥400, ≥500, ≥600, ≥700, ≥800, ≥900, ≥1,000, ≥1,100, ≥1,200, ≥1,300, ≥1,400, ≥1,500, ≥1,600, ≥1,700, ≥1,800, ≥1,900, or ≥2,000 per square centimeter. In embodiments, the loops **145** are present at a density of ≥7.75, ≥15.5, ≥31, ≥46.5, ≥62, ≥77.5, ≥93, ≥108.5, ≥124, ≥139.2, ≥155, ≥170.5, ≥186, ≥201.5, ≥217, ≥232.5, ≥248, ≥263.5, ≥279, ≥294.5, or ≥310 per square centimeter (≥50, ≥100, ≥200, ≥300, ≥400, ≥500, ≥600, ≥700, ≥800, ≥900, ≥1,000, ≥1,100, ≥1,200, ≥1,300, ≥1,400, ≥1,500, ≥1,600, ≥1,700, ≥1,800, ≥1,900, or ≥2,000 per square inch). In embodiments, the loops **145** are present at a density of 50-2,000 per square centimeter. In embodiments, the loops **145** are present at a density of 7.75-310 per square inch or square centimeter (50-2,000 per square inch).

In an embodiment, the barrier backing **160** is formed separately, and then attached to either the primary backing **120** or the reinforced woven synthetic layer **170**, possibly by an adhesive.

### Flooring

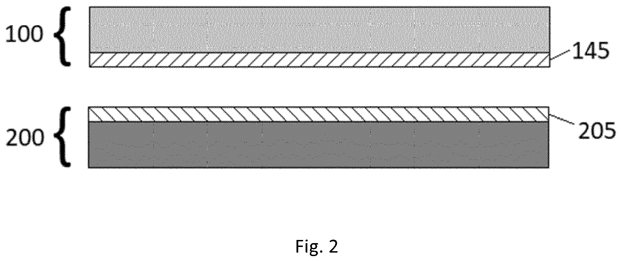

Fig. 2 schematically (not to scale) shows the carpet tile 100 in close proximity to a flooring **200**, which is bound to an aircraft floor (not shown). The flooring **200** comprises a plurality of hooks **205** which may form the hook part of a hook-and-loop system, for coupling with the loops **145** of the carpet tile **100**. Accordingly, the hooks **205** will be capable of coupling with the carpet tile **100** even without the addition of loops other than those naturally present within the barrier backing **160**. The hooks **205** may be attached directly to the aircraft floor, or may be part of a larger flooring component which is itself bound to the aircraft floor.

In embodiments, the hooks **205** are present on the flooring **200** at a density of ≥50, ≥100, ≥200, ≥300, ≥400, ≥500, ≥600, ≥700, ≥800, ≥900, ≥1,000, ≥1,100, ≥1,200, ≥1,300, ≥1,400, ≥1,500, ≥1,600, ≥1,700, ≥1,800, ≥1,900, or ≥2,000 per square centimeter. In embodiments, the hooks **205** are present on the flooring **200** at a density of ≥7.75, ≥15.5, ≥31, ≥46.5, ≥62, ≥77.5, ≥93, ≥108.5, ≥124, ≥139.2, ≥155, ≥170.5, ≥186, ≥201.5, ≥217, ≥232.5, ≥248, ≥263.5, ≥279, ≥294.5, or ≥310 per square centimeter (≥50, ≥100, ≥200, ≥300, ≥400, ≥500, ≥600, ≥700, ≥800, ≥900, ≥1,000, ≥1,100, ≥1,200, ≥1,300, ≥1,400, ≥1,500, ≥1,600, ≥1,700, ≥1,800, ≥1,900, or ≥2,000 per square inch). In embodiments, the hooks **205** are present at a density of 50-2,000 per square centimeter. In embodiments, the hooks **205** are present at a density of 7.75-310 per square centimeter (50-2,000 per square inch).

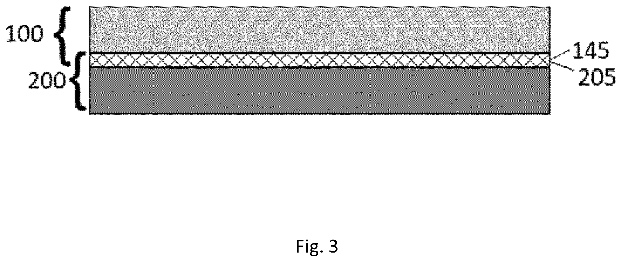

Fig. 3 schematically (not to scale) shows the carpet tile **100** coupled to the flooring **100** by the engagement of the loops **145** and hooks **205**.

In an embodiment, the coupled hook-and-loop system exhibits a peel strength of ≥1, ≥2, ≥3, ≥4, ≥5, ≥6, ≥7, ≥8, ≥9, or ≥10 pounds per inch of width (PIW), as measured according to ASTM D5170. In an embodiment, the coupled hook-and-loop system exhibits a peel strength of 1-10 PIW.

In an embodiment, the coupled hook-and-loop system exhibits a shear strength of ≥5, ≥10, ≥15, ≥20, ≥25, ≥30, ≥35, ≥40, ≥45, ≥50, ≥55, ≥60, ≥65, ≥70, ≥75, ≥80, ≥85, or ≥90 pounds per square inch (psi) as measured according to ASTM D5169. In an embodiment, the coupled hook-and-loop system exhibits a shear strength of 5-90 psi.

In an embodiment, the coupled hook-and-loop system exhibits a tension strength of ≥0.3445, ≥0.689, ≥1.0335, ≥1.378, ≥1.7225, ≥2.067, ≥2.4115, ≥2.756, or ≥3.1005 bar(≥5, ≥10, ≥15, ≥20, ≥25, ≥30, ≥35, ≥40, or ≥45 pounds per square inch (psi)). In an embodiment, the coupled hook-and-loop system exhibits a tension strength of 0.3445-3.1005 bar (5-45 psi). Tension strength may be measured by pulling apart a coupled hook-and-loop system by applying force to the entirety of each side of the system, as opposed to concentrating the force at an edge of the system, as in the peel test exemplified in ASTM D5170.

The hooks **205** may be part of a commercially-available hook-and-loop system, such as those commercially available under the name VELCRO (Velcro USA, Manchester, NH). The hook part of the commercially-available hook-and-loop system may be used without the counterpart loop part, as the hooks **205** will be selected to be compatible with (*i.e.*, able to be coupled with) the loops **145** of the carpet tile **100**. Specifically, the hooks **205** will be compatible with the loops **145** that form part of the nonwoven fabric **140**.

The loops inherently present in the barrier backing allow the barrier backing to serve both as a moisture membrane and to adhere the carpet tile to the aircraft floor, without the addition of a loop part of a hook-and-loop system to the carpet. In doing so, a weight- and cost-savings benefit is realized, as neither the cost nor added weight of the loop part is required.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are encompassed by the disclosure as long as they remain within the scope of the appended claims. Although specific terms are employed herein, they are used in a generic and descriptive sense only and not for purposes of limitation.

## Claims

1. An aircraft floor covering system, said system comprising:
a) a carpet tile (100), said carpet tile (100) comprising a barrier backing (160),
said barrier backing (160) comprising a top surface and a bottom surface, said
top surface comprising a polymer membrane (150), said bottom surface comprising a loop part (145) of a hook-and-loop system (145, 205); and
b) a hook part (205) of the hook-and-loop system (145, 205) configured to be adhered to an aircraft floor, wherein in use of the carpet tile (100) the barrier backing (160) is coupled to the hook part (205) of the hook-and-loop system, system (145, 205), **characterized in that** said polymer membrane (150) is a polyester film membrane.

2. The system of claim 1, wherein said carpet tile (100) comprises a facecloth (130), wherein the facecloth (130) comprises a primary backing (120) having a plurality of face yarns (110) extending through the primary backing (120).

3. The system of claim 2, wherein adhesive (155, 175) is present between the primary backing (120) and the polymer film membrane (150).

4. The system of any one of claims 1-3, wherein said bottom surface of said barrier backing (160) comprises loops in a density of ≥77,5 loops per cm² (≥500 loops per square inch).

5. The system of any one of claims 1-4, wherein said hook part (205) of said hook-and-loop system (145, 205) comprises hooks in a density of ≥77,5 loops per cm² (≥500 hooks per square inch).

6. The system of any one of claims 1-5, wherein said hook-and-loop system (145, 205), when coupled, exhibits a peel strength of ≥1 pounds per inch of width (PIW), as measured according to ASTM D5170.

7. The system of any one of claims 1-5, wherein said hook-and-loop system (145, 205), when coupled, exhibits a shear strength of ≥5 pounds per square inch (psi) as measured according to ASTM D5169.

8. The system of any one of claims 1-5, wherein said hook-and-loop system (145, 205), when coupled, exhibits a tension strength of >0,3445 bar (≥5 pounds per square inch (psi)).

9. The system of any one of claims 1-8, wherein said carpet tile (100) further comprises a woven synthetic layer (170) disposed between the polymer membrane (150) and the primary backing (120).

10. The system of claim 9, wherein adhesive (155, 175) is present between the woven synthetic layer (170) and each of the primary backing (120) and the polymer membrane (150).

11. The system of any one of claims 1-10, wherein the hooks (205) are configured to be attached directly to an aircraft floor.

12. The system of any one of claims 1-11, wherein the hooks (205) are part of a flooring component (200) which is configured to be bound to an aircraft floor.

13. The system of any one of claims 1-12, wherein the weight of the carpet tile (100) is between about 1017,19 - 2034,34 g/m² (30-60 ounces per square yard).

14. The system of any one of claims 1-13, wherein the weight of the carpet tile (100) and flooring, combined, is between about 1356,23 - 3051,52 g/m² (40-90 ounces per square yard).

## Patentansprüche

1. Luftfahrzeug-Bodenbelagsystem, wobei das System umfasst:
a) eine Teppichfliese (100), wobei die Teppichfliese (100) einen Barriererücken (160) umfasst, der Barriererücken (160) eine obere Oberfläche und eine untere Oberfläche umfasst, die obere Oberfläche eine Polymermembran (150) umfasst, die untere Oberfläche einen Schlaufenteil (145) eines Haken-und-Schlaufe-Systems (145, 205) umfasst; und
b) einen Hakenteil (205) des Haken-und-Schlaufe-Systems (145, 205), dafür gestaltet, an einen Luftfahrzeugboden gehaftet zu werden,
wobei in Verwendung der Teppichfliese (100) der Barriererücken (160) an den Hakenteil (205) des Haken-und-Schlaufe-Systems (145, 205) gekoppelt ist,
**dadurch gekennzeichnet, dass** die Polymermembran (150) eine Polyesterfolienmembran ist.

2. System gemäß Anspruch 1, wobei die Teppichfliese (100) eine Nutzschicht (130) umfasst, wobei die Nutzschicht (130) einen primären Rücken (120) mit einer Vielzahl von Florgarnen (110), die durch den primären Rücken (120) verlaufen, umfasst.

3. System gemäß Anspruch 2, wobei Klebstoff (155, 175) zwischen dem primären Rücken (120) und der Polyesterfolienmembran (150) vorhanden ist.

4. System gemäß einem der Ansprüche 1-3, wobei die untere Oberfläche des Barriererückens (160) Schleifen in einer Dichte von ≥ 77,5 Schleifen pro cm² (≥ 500 Schleifen pro Quadratzoll) umfasst.

5. System gemäß einem der Ansprüche 1-4, wobei der Hakenteil (205) des Haken-und-Schlaufe-Systems (145, 205) Haken in einer Dichte von ≥ 77,5 Haken pro cm² (≥ 500 Haken pro Quadratzoll) umfasst.

6. System gemäß einem der Ansprüche 1-5, wobei das Haken-und-Schlaufe-System (145, 205), wenn gekoppelt, eine Abziehfestigkeit von ≥ 1 Pound pro Zoll Breite (PIW), wie gemessen gemäß ASTM D5170, aufweist.

7. System gemäß einem der Ansprüche 1-5, wobei das Haken-und-Schlaufe-System (145, 205), wenn gekoppelt, eine Scherfestigkeit von ≥ 5 Pound pro Quadratzoll (psi), wie gemessen gemäß ASTM D5169, aufweist.

8. System gemäß einem der Ansprüche 1-5, wobei das Haken-und-Schlaufe-System (145, 205), wenn gekoppelt, eine Zugfestigkeit von > 0,3445 bar (≥ 5 Pound pro Quadratzoll (psi)) aufweist.

9. System gemäß einem der Ansprüche 1-8, wobei die Teppichfliese (100) ferner eine gewebte Synthetikschicht (170) aufweist, die zwischen der Polymermembran (150) und dem primären Rücken (120) angeordnet ist.

10. System gemäß Anspruch 9, wobei Klebstoff (155, 175) zwischen der gewebten Synthetikschicht (170) und jedem von dem primären Rücken (120) und der Polymermembran (150) angeordnet ist.

11. System gemäß einem der Ansprüche 1-10, wobei die Haken (205) dafür gestaltet sind, direkt an einem Luftfahrzeugboden befestigt zu werden.

12. System gemäß einem der Ansprüche 1-11, wobei die Haken (205) Teil einer Bodenbelagkomponente (200) sind, die dafür gestaltet ist, an einen Luftfahrzeugboden gebunden zu werden.

13. System gemäß einem der Ansprüche 1-12, wobei das Gewicht der Teppichfliese (100) zwischen etwa 1017,19 und 2034,34 g/m² (30-60 Unzen pro Quadratyard) beträgt.

14. System gemäß einem der Ansprüche 1-13, wobei das Gewicht der Teppichfliese (100) und des Bodenbelags kombiniert zwischen etwa 1356,23 und 3051,52 g/m² (40-90 Unzen pro Quadratyard) beträgt.

## Revendications

1. Système de revêtement du plancher d'un avion, ledit système comprenant :
a) une dalle de moquette (100), ladite dalle de moquette (100) comprenant un dessous faisant office de barrière (160), ledit dessous faisant office de barrière (160) comprenant une surface supérieure et une surface inférieure, ladite surface supérieure comprenant une membrane polymère (150), ladite surface inférieure comprenant un élément sous la forme d'une boucle (145) d'un système du type à crochets et à boucles (145, 205) ; et
b) un élément sous la forme d'un crochet (205) du système du type à crochets et à boucles (145, 205) configuré pour adhérer au plancher d'un avion ;
dans lequel, au cours de l'utilisation de la dalle de moquette (100), le dessous faisant office de barrière (160) est couplé à l'élément sous la forme d'un crochet (205) du système du type à crochets et à boucles (145, 205) :
**caractérisé en ce que** ladite membrane polymère (150) est une membrane sous la forme d'un film à base de polyester.

2. Système selon la revendication 1, dans lequel ladite dalle de moquette (100) comprend un tissu de dessus (130), dans lequel le tissu de dessus (130) comprend un dessous principal (120) possédant un certain nombre de fils de dessus (110) qui s'étendent à travers le dessous principal (120).

3. Système selon la revendication 2, dans lequel un adhésif (155, 175) est présent entre le dessous principal (120) et la membrane sous la forme d'un film (150) à base d'un polymère.

4. Système selon l'une quelconque des revendications 1 à 3, dans lequel ladite surface inférieure dudit dessous faisant office de barrière (160) comprend des boucles en une densité qui est égale ou supérieure à 77,5 boucles par cm² (égale ou supérieure à 500 boucles par pouce carré).

5. Système selon l'une quelconque des revendications 1 à 4, dans lequel ledit élément sous la forme d'un crochet (205) dudit système du type à crochets et à boucles (145, 205) comprend des crochets en une densité qui est égale ou supérieure à 77,5 crochets par cm² (égale ou supérieure à 500 crochets par pouce carré).

6. Système selon l'une quelconque des revendications 1 à 5, dans lequel ledit système du type à crochets et à boucles (145, 205), lorsqu'il est couplé, manifeste une résistance au décollement égale ou supérieure à 1 livre par pouce de largeur (PIW), telle qu'on la mesure en conformité avec la norme ASTM D5170.

7. Système selon l'une quelconque des revendications 1 à 5, dans lequel ledit système du type à crochets et à boucles (145, 205), lorsqu'il est couplé, manifeste une résistance au cisaillement égale ou supérieure à 5 livres par pouce carré (psi), telle qu'on la mesure en conformité avec la norme ASTM D5169.

8. Système selon l'une quelconque des revendications 1 à 5, dans lequel ledit système du type à crochets et à boucles (145, 205), lorsqu'il est couplé, manifeste une résistance à la traction supérieure à 0,3445 bar (supérieure ou égale à 5 livres par pouce carré (psi)).

9. Système selon l'une quelconque des revendications 1 à 8, dans lequel ladite dalle de moquette (100) comprend en outre une couche synthétique tissée (170) qui est disposée entre la membrane polymère (150) et le dessous principal (120).

10. Système selon la revendication 9, dans lequel un adhésif (155, 175) est présent entre la couche synthétique tissée (170) et respectivement le dessous principal (120) et la membrane polymère (150).

11. Système selon l'une quelconque des revendications 1 à 10, dans lequel les crochets (205) sont configurés pour être fixés directement au plancher d'un avion.

12. Système selon l'une quelconque des revendications 1 à 11, dans lequel les crochets (205) font partie d'un composant de revêtement de sol (200) qui est configuré pour être lié au plancher d'un avion.

13. Système selon l'une quelconque des revendications 1 à 12, dans lequel le poids de la dalle de moquette (100) se situe environ entre 1017,19 et 2034,34 g/m² (entre 30 et 60 onces par yard carré).

14. Système selon l'une quelconque des revendications 1 à 13, dans lequel le poids de la dalle de moquette (100) et du revêtement de sol, à l'état combiné, se situe environ entre 1356,23 et 3051,52 g/m² (entre 40 et 90 onces par yard carré).
